(19) Europäisches Patentamt
European Patent Office
Office européen des brevets

(11) Veröffentlichungsnummer: **0 390 026 A2**

(12) **EUROPÄISCHE PATENTANMELDUNG**

(21) Anmeldenummer: **90105694.5**

(51) Int. Cl.5: **C08F 4/00**

(22) Anmeldetag: **26.03.90**

(30) Priorität: **28.03.89 DE 3910022**

(43) Veröffentlichungstag der Anmeldung:
**03.10.90 Patentblatt 90/40**

(84) Benannte Vertragsstaaten:
**BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Baumgartner, Ehrenfried, Dr.**
**Goethestrasse 1**
**D-6701 Roedersheim-Gronau(DE)**
Erfinder: **Blumenstein, Uwe, Dr.**
**Ganderhofstrasse 2**
**D-6700 Ludwigshafen(DE)**
Erfinder: **Bueschl, Rainer, Dr.**
**Hollandstrasse 14**
**D-6701 Roedersheim-Gronau(DE)**
Erfinder: **Rieber, Norbert, Dr.**
**Liebfrauenstrasse 1c**
**D-6800 Mannheim 51(DE)**

(54) **Urazolderivate als Starter der radikalischen Polymerisation.**

(57) Starter für die Radikalkettenpolymerisation sind Urazole der allgemeinen Formel Ia oder Ib

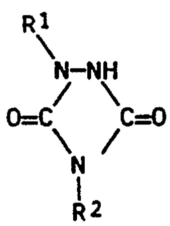
(Ia)

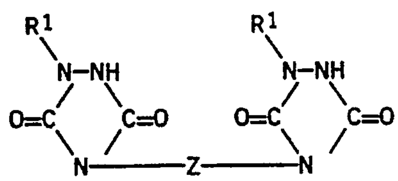
(Ib)

in denen $R^1$ und $R^2$ (Cyclo)-Alkyl, -Alkenyl, -Alkinyl, Aryl, Aralkyl oder Alkylaryl mit jeweils bis zu 30 C-Atomen oder einen 5 bis 8-gliedrigen Heterocyclus mit Stickstoff, Sauerstoff oder Schwefel oder $-NR^3R^4$ bedeuten oder gemeinsam eine Alkylenbrücke mit 2 bis 4 C-Atomen bilden, wobei $R^3$ und $R^4$ die Bedeutung von $R^1$ außer $NR^3R^4$ haben und Z ein chemisch indifferentes Zwischenglied bedeutet.

EP 0 390 026 A2

## Urazolderivate als Starter der radikalischen Polymerisation

Die Erfindung betrifft die Verwendung von 1,4-disubstituierten Urazolen als Auslöser (Initiator) für die Radikalkettenpolymerisation.

Sauerstoff wirkt bekannterweise als Inhibitor bei der radikalischen Polymerisation, weshalb für die Polymerisation bestimmte Reaktionsgemische gründlich mit einem Inertgas (z.B. $N_2$) gespült werden (B. Vollmert, Grundriss der Makromolekularen Chemie, Band I, S. 74; E. Vollmert Verlag, Karlsruhe, 1985).

Aufgabe der vorliegenden Erfindung war es, ein Initiatorsystem zu finden, das zumindest unempfindlich gegenüber Sauerstoff sein oder möglichst sogar Sauerstoff benötigen sollte, um Primarradikale zu erzeugen.

Es wurde gefunden, daß 1,4-disubstituierte Urazole diese Bedingungen erfüllen.

Erfindungsgegenstand ist daher ein Verfahren zur Herstellung von Polymeren aus Monomeren, die der Radikalkettenpolymerisation zugänglich sind, durch Zugabe eines zur Bildung von Primärradikalen befähigten Stoffes und Auslösung der Polymerisation durch Bildung von Primärradikalen, bei dem als zur Primärradikalbildung fähiger Stoff ein Urazol der allgemeinen Formel Ia oder Ib verwendet wird

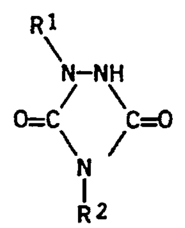
(Ia)

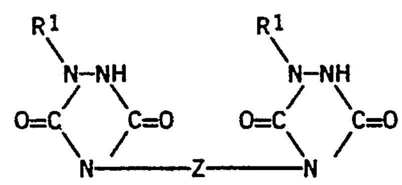
(Ib)

in der $R^1$ und $R^2$ (Cyclo)-Alkyl, -Alkenyl, -Alkinyl, Aryl, Aralkyl oder Alkylaryl mit jeweils bis zu 30 C-Atomen oder einen 5 bis 8-gliedrigen Heterocyclus mit Stickstoff, Sauerstoff oder Schwefel oder $-NR^3R^4$ bedeuten oder gemeinsam eine Alkylenbrücke mit 2 bis 4 C-Atomen bilden, wobei $R^3$ und $R^4$ die Bedeutung von $R^1$ außer $NR^3R^4$ haben und Z ein chemisch indifferentes Zwischenglied bedeutet.

Die Bildung der gewünschten Primärradikale wird z.B. durch Sauerstoff bewirkt.

Aus W.H. Pirkle und P.Z. Gravel, J. Org. Chem. 43, 808-815 (1978) war bekannt, daß 1,4-disubstituierte Urazole mit Oxidationsmitteln zu mehr oder weniger stabilen Urazolradikalen umgesetzt werden können. Unbekannt war bisher, daß die erzeugten Radikale in der Lage sind, eine radikalische Polymerisation zu starten. Dies ist umso überraschender, da ähnliche N-N-Radikale als Inihibitoren bei der radikalischen Polymerisation wirken, z.B. Diphenylpikrylhydrazol (DPPH) (B. Vollmert, Grundriß der Makromolekularen Chemie, Band I, S. 74).

Die Bildung reaktiver Urazol-Radikale durch Oxidation mit Sauerstoff verläuft vermutlich nach folgendem Reaktionschema

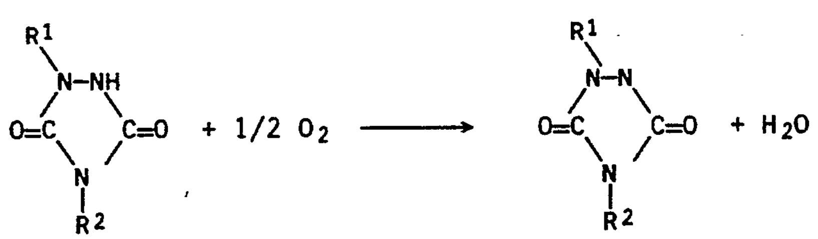

(1)

Die Erzeugung dieser Radikale ist auch mit anderen Oxidationsmitteln genügend hohen Oxidationspotentials ohne weiteres möglich. Die Radikale können entweder in situ in der Monomermischung erzeugt werden oder - da sie hinreichend langlebig sind - nach Erzeugung in einem inerten Lösungsmittel dem Monomeransatz zudosiert werden, was sowohl kontinuierlich als auch diskontinuierlich erfolgen kann.

Für die In-situ-Erzeugung reichen die in den Monomeren üblicherweise gelösten Mengen Sauerstoff aus, um eine radikalische Polymerisation zu starten.

Bei den 1,4-disubstituierten Urazolen Ia und Ib können die Reste $R^1$, $R^2$ entweder gleich oder verschieden voneinander sein. $R^1$ oder $R^2$ können stehen für jeweils unsubstituiertes oder substituiertes

Alkyl, Cycloalkyl, Aryl, Aralkyl oder Alkylaryl mit bis zu 30 C-Atomen, einen 5- bis 8-gliedrigen Heterocyclus mit Stickstoff, Sauerstoff oder Schwefel als Heteroatom oder für $NR^3R^4$, wobei $R^3$ und $R^4$ $C_1$-$C_4$-Alkylgruppen und insbesondere Wasserstoff sind.

$R^1$, $R^2$ können auch (Cyclo)Alkenyl- oder (Cyclo)Alkinylreste mit 2 bis 30 C-Atomen darstellen.

Beispiele für Alkylreste sind Methyl, Ethyl, Propyl, Butyl, Pentyl, Hexyl, Heptyl, Octyl, Nonyl, Decyl, Undecyl, Dodecyl, Neopentyl, 3,5,5-Trimethylhexyl, 3-Methylhexyl, 2-Ethylhexyl und 2,5,5-Trimethylhexyl.

Ein Beispiel für einen Cycloalkylrest ist Cyclohexyl.

Beispiele für Aralkylreste sind Benzyl und Phenethyl.

Unsubstituierte Arylreste sind beispielsweise Phenyl und Naphthyl.

Substituierte Arylreste sind Alkylaryl-, Cycloalkylaryl-, arylsubstituierte Alkylaryl- und arylsubstituierte Aryl-Reste.

Beispiele für Alkylarylreste sind 2-, 3- und 4-Tolyl, 2,6- und 2,4-Dimethylphenyl, Trimethylphenyl, 2-, 3- und 4-Isopropylphenyl, Nonylphenyl, tert.-Butylphenyl, 2,4-Diisopropylphenyl und Triisopropylphenyl. Ein Beispiel für einen Cycloalkylarylreste ist 2-Cyclohexylphenyl. Beispiele für arylsubstituierte Alkylarylreste sind p-Benzylphenyl und p-Phenylethylphenyl.

Ein Beispiel für arylsubstituiertes Aryl ist Diphenyl.

Als Radikalstarter führen Bisurazole Ib, d.h. Urazole mit mehr als einer Urazol-gruppe, zu verzweigten Polymeren oder zu Polymeren mit engerer Molgewichtsverteilung. Bevorzugt sind Bisurazole der Struktur Ib

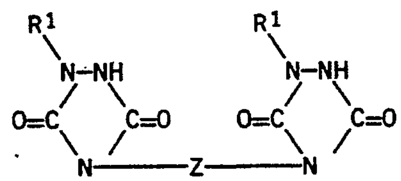

(Ib)

in der "Z" eines der nachstehenden Brückenglieder ist.

Als Brückenglied "Z" gut geeignet sind zweiwertige Reste etwa folgender Strukturen:

$-(CH_2)_n-$ mit n = 1 bis 12

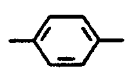 ,

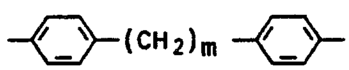 mit m = 1 bis 12 und

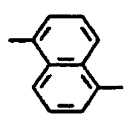

Ferner kann "Z" auch sein, wobei p und q z.B. 1 bis 20 sind:

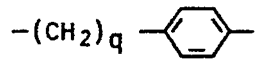 ,

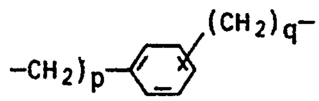 ,

$-(CH_2)_2O(CH_2)_2-$ ,

$-(CH_2)_2O(CH_2)_2-$ ,

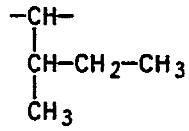 ,

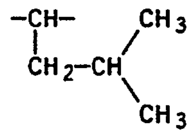 ,

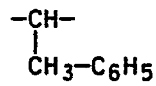 ,

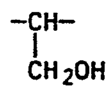 ,

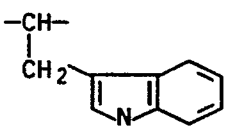 und

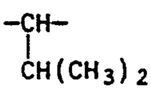

Die Verbindungen I und II können nach den Angaben von W.H. Pirkle und P.L. Gravel in J. Org. Chem. 43, 808 (1978) hergestellt werden.

Als Monomere, die mit den Verbindungen (I) und/oder (II) polymerisiert werden können, kommen die zur radikalischen Homo- und/oder Copolymerisation befähigten üblichen ungesättigten Vinylverbindungen in Frage. Als Beispiele sind u.a. zu nennen:

Styrol, α-Methylstyrol, p-Methylstyrol, Methacrylsäureester, Acrylsäureester, (Meth)acrylamidderivate, Acrylnitril, Vinylester, Vinylchlorid, Vinylalkohol, Maleinsäureimide.

Die mit den beschriebenen Verbindungen Ia und/oder Ib hergestellten Polymeren unterscheiden sich nicht von den mit Peroxiden hergestellten Polymeren.

Als Monomere, die mit den erfindungsgemäßen Verbindungen umsetzbar sind, eignen sich die üblichen, zur Polymerisation befähigten ungesättigten Vinylverbindungen. Als Beispiele sind zu nennen:

Styrol, α-Methylstyrol, p-Methylstyrol, Methacrylsäureester, Acrylsäureester, (Meth)acrylamidderivate, Acyrlnitril, Vinylester, Vinylchlorid, Vinylalkohol, Maleinsäureanhydrid und Maleinsäureimide.

Beispiele 1 - 3, Vergleichsversuch

Die Versuche zu den Beispielen 1 - 3 und der Vergleichsversuch wurden diskontinuierlich nach dem Masse-Suspensionsverfahren in einem mit einem Ankerrührer ausgerüsteten 5-1-Reaktor durchgeführt.

Es wurden jeweils 1500 g Styrol und 500 g Acrylnitril im Reaktor miteinander vermischt und darin jeweils $1{,}58 \cdot 10^{-2}$ mol eines 1,4-disubstituierten Urazols Ia ($R^1$ und $R^2$ sind jeweils angegeben) gelöst.

Anschließend wurde der Reaktorinhalt unter Rühren (100 Umdrehungen pro Min.) auf 80 °C aufgeheizt und durch Kühlen bei 80 °C gehalten. Das Fortschreiten der Polymerisation wurde durch Bestimmung des Feststoffgehaltes der Reaktionsmischung in 30 minütigem Abstand festgehalten:

| Beispiel | 1 | 2 | 3 | Vergleich |
|---|---|---|---|---|
| $R^2$ | Phenyl | Phenyl | Phenyl | - |
| $R^1$ | Phenyl | Cyclohexyl | n-Butyl | - |
| Menge Urazol [g] | 4,0 | 4,1 | 3,7 | - |
| Feststoffgehalt in Gew.% nach | | | | |
| 60 [min.] | 5,7 | 4,7 | 4,2 | 0 |
| 90 [min.] | 10,8 | 8,9 | 8,7 | 0 |
| 120 [min.] | 15,7 | 13,7 | 12,6 | 0 |
| 150 [min.] | 19,3 | 18,9 | 16,3 | 0 |
| 180 [min.] | 23,7 | 21,3 | 20,6 | 0,5 |
| 210 [min.] | 27,9 | 26,8 | 24,7 | 1,0 |
| 240 [min.] | 33,2 | 31,5 | 29,3 | 2,0 |
| 270 [min.] | 36,8 | 36,2 | 32,7 | 3,0 |
| 300 [min.] | 41,2 | 39,9 | 38,1 | 4,0 |

Nach Erreichen eines Feststoffgehaltes von 40 Gew.-% wurde das Polymergemisch mit 1,5 g Dicumylperoxid versetzt und in einer wäßrigen Lösung von 1,8 g Na-Phosphat, 18 g Luviskol K 90® sowie 50 g Ertivinol® (Luviskol K9 bzw. Ertivinol sind handelsübliche Suspensionshilfsmittel bzw. Emulgatoren) in 1800 g Wasser durch kräftiges Rühren (300 UPM) dispergiert.

Ein Umsatz von 99 % wurde durch Polymerisation während
3 h bei 110 °C (Beispiel 1)
3 h bei 130 °C (Beispiel 2)
4 h bei 140 °C (Beispiel 3)
erreicht.

Das jeweils erhaltene Perlpolymerisat wurde mit destilliertem Wasser gründlich gewaschen und bei 80 °C über Nacht im Vakuum getrocknet.

Die Eigenschaften der Polymeren sind in der folgenden Tabelle zusammengestellt.

| Meßgröße | Meßmethode | Dimension | Beispiel | | |
|---|---|---|---|---|---|
| | | | 1 | 2 | 3 |
| Viskositätszahl [0,5 %ig in DMF] | DIN 53 726 | [ml/g] | 96,2 | 97,4 | 95,1 |
| Schmelzflußindex [200 °C/21,6 kp] | DIN 53 735 | [g/10 min.] | 12,2 | 12,1 | 13,1 |
| Vicat B (VST/B/50) | DIN 53 460 | [°C] | 99,3 | 98,7 | 100,3 |

Beispiele 4 - 6, Vergleichsversuch

Es wurde wie in den Beispielen 1 - 3 verfahren, jedoch wurde ausschließlich 2000 g Styrol mit jeweils $1{,}58 \cdot 10^{-2}$ mol 1,4-disubstituiertem Urazol versetzt. Die Polymerisation geschah unter den gleichen Bedingungen wie in den Beispielen 1 - 3.

| Beispiel | 4 | 5 | 6 | Vergleich |
|---|---|---|---|---|
| $R^2$<br>$R^1$<br>[g] Urazol | Phenyl<br>Phenyl<br>4,0 | Phenyl<br>Cyclohexyl<br>4,1 | Phenyl<br>n-Butyl<br>3,7 | -<br>-<br>- |
| Feststoffgehalt in Gew.% nach | | | | |
| 60 [min.] | 4,2 | 3,4 | 1,7 | 0 |
| 90 [min.] | 5,2 | 5,1 | 3,4 | 0 |
| 120 [min.] | 7,4 | 6,9 | 6,0 | 0 |
| 150 [min.] | 8,5 | 8,2 | 7,7 | 0 |
| 180 [min.] | 9,6 | 10,8 | 9,5 | 0,2 |
| 210 [min.] | 12,1 | 13,4 | 12,8 | 0,7 |
| 240 [min.] | 13,6 | 16,1 | 15,3 | 1,2 |
| 270 [min.] | 15,9 | 18,9 | 17,3 | 1,8 |
| 300 [min.] | 16,3 | 19,6 | 18,5 | 2,0 |

Nach Erreichen eines Feststoffgehaltes von ca. 20 Gew.-% wurde das Polymergemisch mit 1,5 g Dicumylperoxid versetzt und in einer wäßrigen Lösung von 1,8 g Na-Phosphat, 18 g Luviskol K 90 und 50 g Ertivinol in 1800 g Wasser dispergiert.

Ein Umsatz von mehr als 98 % wurde durch Polymerisation über jeweils 3 h bei 110, 120 und 130 °C erreicht.

Das erhaltene Perlpolymerisat wurde mit destilliertem Wasser gewaschen und bei 80 °C über Nacht im Vakuum getrocknet. Die Eigenschaften sind in der nachfolgenden Tabelle zusammengefaßt.

| Beispiel | | | 4 | 5 | 6 |
|---|---|---|---|---|---|
| Viskositätszahl [0,5 %ig in Toluol] | DIN 53 726 | [ml/g] | 65,0 | 63,7 | 66,8 |
| Schmelzflußindex [200 °C/5 kp] | DIN 53 735 | [g/10 min.] | 5,3 | 5,6 | 4,9 |
| Vicat B (VST/B/50) | DIN 53 460 | [°C] | 90,0 | 91,0 | 93,0 |

Beispiel 7

Es wurden 1500 g Styrol und 500 g Acrylnitril im 5-1-Reaktor miteinander vermischt und 4,0 g 1,4-Diphenylurazol darin gelöst. Anschließend wurde 3 mal mit Stickstoff gespült und danach auf 80 °C aufgeheizt. Nach 150 min. wurde ein Stillstand der Polymerisation beobachtet, der dadurch aufgehoben werden konnte, daß der Reaktorinhalt nach 240 min. einmal mit Luft gespült wurde.

Beispiel

| Feststoffgehalt in Gew.-% nach | |
|---|---|
| 60 min. | 5,8 |
| 90 min. | 10,7 |
| 120 min. | 14,9 |
| 150 min. | 17,4 |
| 180 min. | 17,6 |
| 210 min. | 17,8 |
| 240 min. | 18,0 (Luft-Begasung) |
| 270 min. | 20,0 |
| 300 min. | 24,4 |
| 333 min. | 29,5 |

Der Reaktorinhalt wurde wie vorstehend beschrieben zu Ende polymerisiert. Die Eigenschaften des Polymeren entsprechen ebenfalls denen der in den Beispielen 1 - 3 erhaltenen Produkten:

| | | | |
|---|---|---|---|
| Viskositätszahl [0,5 %og in DMF] | DIN 53 726 | [ml/g] | 105 |
| Schmelzflußindex | DIN 53 735 | [g/10 min.] | 9,6 |
| Vicat B (VST/B/50) | DIN 53 460 | [°C] | 101,3 |

Beispiel 8

Es wurden 1900 g Methylmethacrylat und 100 g Methylacrylat zusammen mit 6 g tert.-Dodecylmercaptan im 5-1-Reaktor miteinander gemischt. Anschließend wurde 3 mal mit Stickstoff gespült und danach auf 100°C geheizt.

Um die für MMA-Polymerisationen typische Anlaufphase, nach der die Reaktion erst ihre volle Umsatzgeschwindigkeit erreicht, zu übergehen, wurde die Umsetzung zunächst mit einem üblichen Initiator begonnen. Hierzu wurde zunächst tert.-Butylperpivalat (als 1 %ige Lösung in MMA) kontinuierlich mit einer Geschwindigkeit von 0,02 Gew.%/h, bezogen auf den Gesamtumsatz zudosiert.

Nach Erreichen von 15 Umsatz-% wurde die Reaktionsmischung eine Stunde bei 100°C belassen, um Initiatorreste abreagieren zu lassen. Nach Abkühlung auf 65°C wurde 1,82 g 4-Methylurazol (0,091 % bzgl. Monomeren) gelöst in 15 ml DMF zugesetzt. Anschließend wurde auf 80°C geheizt und der Feststoffgehalt in Abhängigkeit von der zeit gemessen.

Nach Abklingen der Reaktion wurde nach Abkühlung auf 65°C erneut 1,23 g 4-Methylurazol zugesetzt (0,09 % bzgl. Monomeren) und der Fortgang der reaktion bei 80°C weiterverfolgt.

Die Ergebnisse sind der nachfolgenden Tabelle zu entnehmen.

| Beispiel | 8 | 9 (Vergleichsversuch) |
|---|---|---|
| Reaktionszeit [h] | Feststoffgehalt [Gew.-%] | |
| 0,5 | 12 | 12 |
| 1,0 | 14 | - |
| 1,5 | 15 (1. Zugabe von 4-Methylurazol) | 15 |
| 1,9 | 17 | - |
| 2,2 | 19 | - |
| 2,4 | 20,5 | 15,5 |
| 2,9 | 22,5 | - |
| 3,2 | 23,5 | - |
| 3,5 | 23,5 | - |
| 3,7 | 23,5 (2. Zugabe von 4-Methylurazol) | 15,5 |
| 4,0 | 24,0 | - |
| 4,3 | 25,5 | - |
| 4,6 | 26,5 | - |
| 5,7 | 28,0 | 16,0 |

Das im Beispiel hergestellte Polymethylmethacrylat wurde in Methanol gefällt und getrocknet. Die Viskositätszahl einer 0,5 %igen Lösung in Cyclohexan wurde nach DIN 53 726 zu 119 ml/g bestimmt.

## Ansprüche

1. Verfahren zur Herstellung von Polymeren aus Monomeren, die der Radikalkettenpolymerisation zugänglich sind, durch Zugabe eines zur Bildung von Primärradikalen befähigten Stoffes und Auslösung der Polymerisation durch Bildung von Primärradikalen, dadurch gekennzeichnet, daß man als zur Primärradikalbildung fähigen Stoff ein Urazol der allgemeinen Formeln Ia oder Ib verwendet

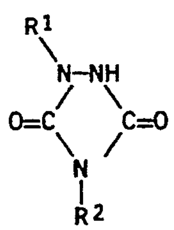 (Ia) 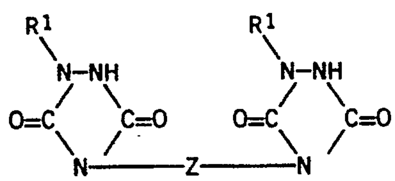 (Ib)

in denen $R^1$ und $R^2$ (Cyclo)-Alkyl, -Alkenyl, -Alkinyl, Aryl, Aralkyl oder Alkylaryl mit jeweils bis zu 30 C-Atomen oder einen 5 bis 8-gliedrigen Heterocyclus mit Stickstoff, Sauerstoff oder Schwefel oder -$NR^3R^4$ bedeuten oder gemeinsam eine Alkylenbrücke mit 2 bis 4 C-Atomen bilden, wobei $R^3$ und $R^4$ die Bedeutung von $R^1$ außer $NR^3R^4$ haben und Z ein chemisch indifferentes Zwischenglied bedeutet und die Polymerisation durch Oxidation auslöst.

2. Durch Radikalkettenpolymerisation erhaltenes Polymerisat, dessen Kettenmoleküle mindestens teilweise ein vom Urazol der Formeln Ia bzw. Ib des Anspruchs 1 abgeleitetes Kettenende aufweisen.